# EUROPEAN PATENT APPLICATION

(11) **EP 4 064 639 A1**
(43) Date of publication of application: **28.09.2022**
(21) Application number: 22157400.7
(22) Date of filing: 18.02.2022
(51) Int. Cl.: H04L 41/044, H04L 41/08, H04L 41/0654

(54) **SCOPE ASSIGNMENTS OF NETWORK AUTOMATION FUNCTIONS**

(30) Priority: 24.03.2021 FI 20215336
(71) Applicant: Nokia Solutions and Networks Oy, 02610 Espoo (FI)
(72) Inventor: MWANJE, Stephen, 84405 Dorfen (DE); SANNECK, Henning, 81549 Munich (DE)
(74) Representative: Nokia EPO representatives

(57) **Abstract**

To configure network automation functions, a scope administration function assigns, per a region in an operator-defined scope space, the region to one or more network automation function amongst a plurality of coexisting network automation functions. Then, per a network automation function assigned at least to one region, the network automation function is configured to control the at least one region assigned to the network automation function.

## Description

### TECHNICAL FIELD

Various example embodiments relate to wireless communications.

### BACKGROUND

Wireless communication systems are under constant development. Operations, Administration and Management (OAM) functions are also developing to support developments in network, such as cognitive autonomous networks.

### BRIEF DESCRIPTION

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to an aspect there is provided an apparatus comprising at least one processor; and at least one memory including computer program code, the at least one memory and computer program code configured to, with the at least one processor, cause the apparatus at least to perform: running a scope administration function; assigning, by the scope administration function, per a region in an operator-defined scope space, the region to at least one network automation function amongst a plurality of coexisting network automation functions; configuring, by the scope administration function, per a network automation function assigned at least to one region, the network automation function to control the at least one region assigned to the network automation function.

In an embodiment, the at least one memory and computer program code are configured to, with the at least one processor, cause the apparatus further to at least to perform: dividing, by the scope administration function, before performing the assigning, the operator-defined scope space into regions, wherein the regions cover the whole operator-defined scope space.

In embodiments, the at least one memory and computer program code configured to, with the at least one processor, cause the apparatus further to perform: determining, by the scope administration function, objective of the region; and assigning, by the scope administration function, to the region one or more network automation functions that maximize the objective.

In embodiments, the at least one memory and computer program code configured to, with the at least one processor, cause the apparatus further to perform: re-assigning, by the scope administration function, in response to receiving from a network automation function a request to update at least one region assigned to the network automation function, one or more regions in the operator-defined scope space; and reconfiguring at least network automation functions whose assigned one or more regions changed during the re-assigning to correspond to the re-assigned regions.

In embodiments, the at least one memory and computer program code configured to, with the at least one processor, cause the apparatus further to perform: providing an interface over which the operator-defined scope space is received and/or changes to the operator-defined scope space are received.

According to an aspect there is provided an apparatus comprising at least one processor; and at least one memory including computer program code, the at least one memory and computer program code configured to, with the at least one processor, cause the apparatus at least to perform: running at least one network automation function; and configuring, in response to receiving from a scope administration function at least one region within an operator-defined scope space assigned to one of the at least one network automation function, said one of the at least one network automation function to control the at least one region.

In an embodiment, the at least one memory and computer program code are configured to, with the at least one processor, cause the apparatus further to at least to perform: detecting a scope related problem with at least one of the at least one region; and requesting the scope administration function to update said at least one of the at least one region.

In embodiments, the at least one memory and computer program code configured to, with the at least one processor, cause the apparatus further to at least to perform: reconfiguring, in response to receiving from the scope administration function an update to at least one region assigned to one of the at least one network automation function, said one of the at least one network automation function correspondingly.

In embodiments, the at least one memory and computer program code configured to, with the at least one processor, cause the apparatus further to at least to perform using a dedicated interface between the network automation function and the scope administration function.

According to an aspect there is provided an apparatus comprising means for performing: running a scope administration function; assigning, by the scope administration function, per a region in an operator-defined scope space, the region to at least one network automation function amongst a plurality of coexisting network automation functions; configuring, by the scope administration function, per a network automation function assigned at least to one region, the network automation function to control the at least one region assigned to the network automation function.

According to an aspect there is provided an apparatus comprising means for performing: running at least one network automation function; and configuring, in response to receiving from a scope administration function at least one region within an operator-defined scope space assigned to one of the at least one network automation function, said one of the at least one network automation function to control the at least one region.

According to an aspect there is provided a method comprising: running a scope administration function; assigning, by the scope administration function, per a region in an operator-defined scope space, the region to at least one network automation function amongst a plurality of coexisting network automation functions; and configuring, by the scope administration function, per a network automation function assigned at least to one region, the network automation function to control the at least one region assigned to the network automation function.

According to an aspect there is provided a method comprising: running at least one network automation function; receiving from a scope administration function at least one region within an operator-defined scope space assigned to one of the at least one network automation function; and configuring, in response to, said one of the at least one network automation function to control the at least one region

According to an aspect there is provided a computer-readable medium comprising program instructions, which, when run by an apparatus, causes the apparatus at least to carry out: assigning, per a region in an operator-defined scope space, the region to at least one network automation function amongst a plurality of coexisting network automation functions; and configuring, per a network automation function assigned at least to one region, the network automation function to control the at least one region assigned to the network automation function.

According to an aspect there is provided a non-tangible computer-readable medium comprising program instructions, which, when run by an apparatus, causes the apparatus at least to carry out: assigning, per a region in an operator-defined scope space, the region to at least one network automation function amongst a plurality of coexisting network automation functions; and configuring, per a network automation function assigned at least to one region, the network automation function to control the at least one region assigned to the network automation function.

According to an aspect there is provided a computer-readable medium comprising program instructions, which, when run by an apparatus, causes the apparatus at least to carry out: configuring, in response to receiving from a scope administration function at least one region within an operator-defined scope space assigned to one of the at least one network automation function, said one of the at least one network automation function to control the at least one region.

According to an aspect there is provided a non-tangible computer-readable medium comprising program instructions, which, when run by an apparatus, causes the apparatus at least to carry out: configuring, in response to receiving from a scope administration function at least one region within an operator-defined scope space assigned to one of the at least one network automation function, said one of the at least one network automation function to control the at least one region.

According to an aspect there is provided a computer program comprising instructions which, when the program is executed by an apparatus, cause the apparatus to carry out at least: assigning, per a region in an operator-defined scope space, the region to at least one network automation function amongst a plurality of coexisting network automation functions; configuring, per a network automation function assigned at least to one region, the network automation function to control the at least one region assigned to the network automation function.

According to an aspect there is provided a computer program comprising instructions which, when the program is executed by an apparatus, cause the apparatus to carry out at least: configuring, in response to receiving from a scope administration function at least one region within an operator-defined scope space assigned to one of the at least one network automation function, said one of the at least one network automation function to control the at least one region.

### BRIEF DESCRIPTION OF DRAWINGS

Embodiments are described below, by way of example only, with reference to the accompanying drawings, in which
Figure 1 illustrates an exemplified wireless communication system;
Figure 2 is a schematic block diagram;
Figure 3 illustrates an example of information exchange;
Figures 4 to 8 are flow charts illustrating different examples of functionalities; and
Figures 9 and 10 are schematic block diagrams.

### DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first element could be termed a second element, and similarly, a second element could be also termed a first element without departing from the scope of the present disclosure.

Embodiments and examples described herein may be implemented in any communications system comprising wireless connection(s). In the following, different exemplifying embodiments will be described using, as an example of an access architecture to which the embodiments may be applied, a radio access architecture based on new radio (NR, 5G) or long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), beyond 5G, wireless local area network (WLAN or WiFi), worldwide in-teroperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

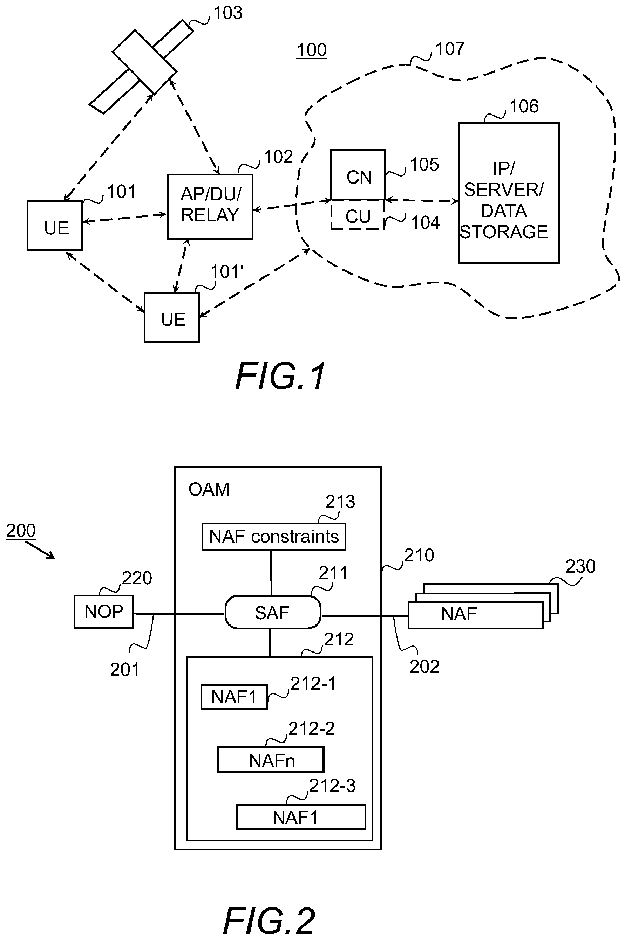

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 101 and 101' configured to be in a wireless connection on one or more communication channels in a cell with an access node (such as (e/g)NodeB) 102 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point (AP) etc. entity suitable for such a usage.

A communications system 100 typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), access and mobility management function (AMF), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus.

The user device typically refers to a portable computing device that includes wireless mobile communication devices operating with a subscription entity, for example a subscriber identification module (SIM), including, but not limited to, the following types of wireless devices: a mobile station (mobile phone), smartphone, personal digital assistant (PDA), handset, device using a wireless modem (alarm or measurement device, etc.), laptop and/or touch screen computer, tablet, game console, notebook, wearable device, and multimedia device. It should be appreciated that a user device may also be a nearly exclusive uplink only device, of which an example is a camera or video camera loading images or video clips to a network. A user device may also be a device having capability to operate in Internet of Things (loT) network which is a scenario in which objects are provided with the ability to transfer data over a network without requiring human-to-human or human-to-computer interaction. The user device may also utilise cloud. In some applications, a user device may comprise a small portable device with radio parts (such as a watch, earphones or eyeglasses) and the computation is carried out in the cloud. The user device is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors micro-controllers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes or corresponding network devices than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloud-let, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106, or utilise services provided by them. The communication network may also be able to support the usage of cloud services, for example at least part of core network operations may be carried out as a cloud service (this is depicted in Figure 1 by "cloud" 107). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 102) and non-real time functions being carried out in a centralized manner (in a centralized unit, CU 104).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (loT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as relay nodes, for example distributed unit (DU) parts of one or more integrated access and backhaul (IAB) nodes, or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

In 5G and beyond, network automation will play a key role in the way networks and services are managed and orchestrated. Using run-time performance data, the network can ensure automatic deployment of new elements as needed. For example, in cognitive autonomous networks, a network management automation can automatically determine network performance objectives by comparing best- and worst-performing cells and by mapping current state of the network to the objectives to reach the desired future state, and to determine recommendable actions, which may be automatically implemented or implemented if an operator approval is received. Another example includes zero-touch automated network and service management, also based on model-driven approach, that performs the management of services and resources through the use of information models, and supports closed-loop management automation. The information models capture the definition of managed entities in terms of attributes and supported operations. The models are defined independent from the implementation of the managed entities to enable zero-touch network and service management in a multi-vendor environment. Closed-loop automation is a feedback driven process which allow self-optimization, improvement of network and resource utilization, and automated service assurance and fulfilment, for example.

Figure 2 is a schematic block diagram illustrating a high-level architecture of a system 200 utilizing network automation. The system 200 may be implemented, for example, in a cognitive autonomous network or in a zero-touch automated network.

Referring to Figure 2, in the illustrated example the system 200 comprises operations, administration and maintenance (OAM) equipment (apparatus) 210, which is connected via a dedicated interface 201 to network operator (NOP) equipment (apparatus) 220 and via dedicated interfaces 202 (network automation function input interfaces) to assigned network automation function (NAF) entities 230 residing in different domains/different tools, for example in resources and functional level in one or more access networks, edge cloud, wide area transport network, core cloud.

The operations, administration and maintenance (OAM) equipment 210 comprises a scope administration function (SAF) 211, an operator-defined scope space 212, and network automation function (NAF) constraints 213.

The operator-defined scope space 212 is a set of all network resources in all domains with corresponding constraints that should be fulfilled. The operator-defined scope space 212 includes controllable or configurable network resources network resources that are monitored, i.e. taken as input in decision-making processes. The operator-defined scope space is defined via the dedicated interface 201. The operator-defined scope space comprises a plurality of regions 212-1, 212-2, 212-3, or sub-spaces, that may be assigned, by the scope administration function, to one or more network automation functions, as will be described in more detail below.

In the network automation function constraints 213, network automation functions are associated with sets of constraints, per a network automation function type with a set of constraints that must be fulfilled. The sets may comprise different constraints. For example, constraints in a set associated with a load balancing network automation function are different than constraints in a set associated with an interference optimization network automation function. The sets are defined by the network operator (for example one or more persons using equipment 220) and/or a vendor for the network automation functions.

The network operator 220 is in charge of orchestrating resources, potentially from multiple virtualized infrastructure providers.

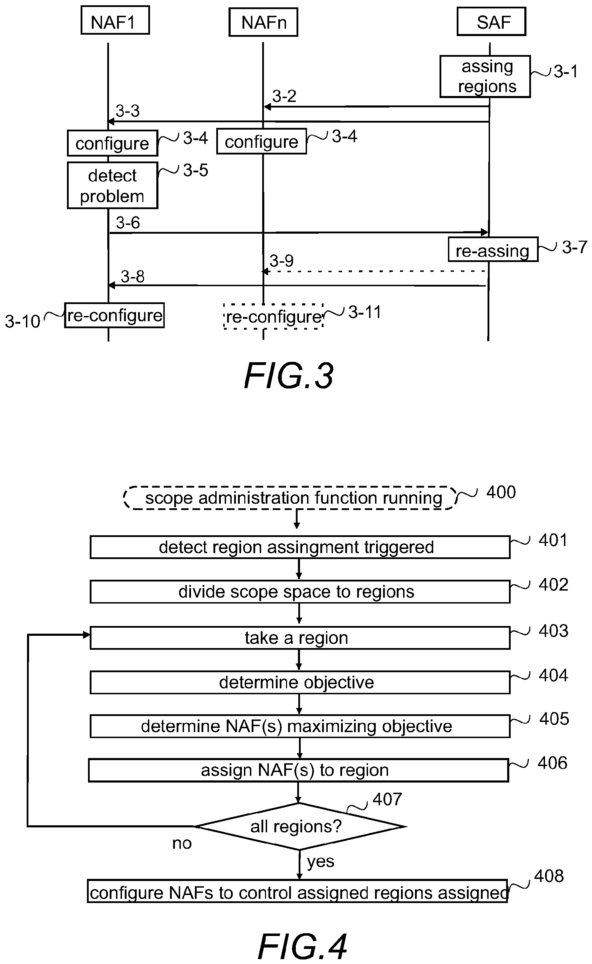

Figure 3 illustrates an example of information exchange over the network automation function input interfaces and related functionality.

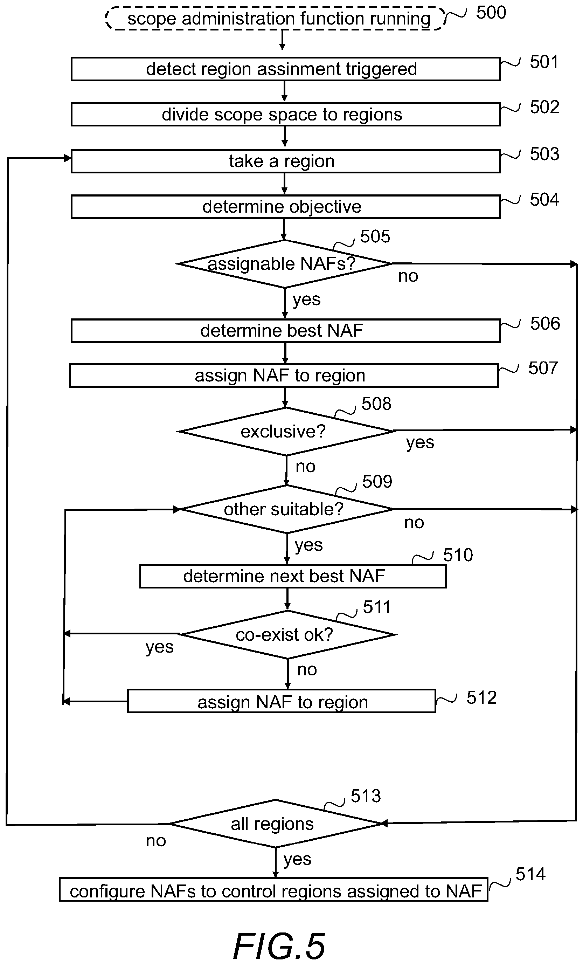

Referring to Figure 3, the scope administration function SAF assigns in block 301 regions to network automation functions, for example as will be described with Figures 4 and 5, and then configures, per a network automation function assigned to one or more regions, the network automation functions over the network automation function input interfaces (messages 3-2, 3-3). The assignment means that the assigned network automation function is responsible for the region, wherein being responsible may include monitoring, changing one or more parameters or improving the region, just to list couple of examples without limiting the assigning to the examples. The assignment may include mere indication of the region, or contain more detailed information, for example, on parameters that can be changed and /or on parameters that can be monitored.

The network automation functions, depicted in the example of Figure 3 by NAF1, NAFn, configure in block 3-4 themselves accordingly. In other words, a network automation function assigned at least to one region configures itself to control the at least one region according to the received configuration, for example by setting one or more values.

In the illustrated example, a network automation function NAF1 detects in block 3-5 a problem relating to a controlled region and uses a network automation function input interface (message 3-6) to inform the scope administration function SAF on the problem. Message 3-6 may be an update request, for example. For example, the network automation function NAF1 may detect in block 3-5 that values NAF1 set in block 3-4 are also reset by another network automation function. Another example includes that the network automation function NAF1 may detect (observe) in block 3-5 that parameters that the network automation function NAF1 is allowed to change do not cause an effect the network automation function NAF1 expects on its performance metrics. For example, the network automation function NAF1 may be a traffic steering network automation function and the configuration in message 3-3 may only allow the network automation function NAF1 to change handover settings. However, changing handover settings do not lead to any change in a load distribution. Therefore, by means of the update request, the network automation function may align its current/actual scope coverage with a target scope coverage.

In response to receiving over the network automation function input interface (message 3-6) information on the problem, the scope administration function SAF re-assigns in block 3-7 at least NAF1, and depending on the problem, possible also other network automation functions affected by the re-assigning. Then the scope administration function SAF re-configures, per a network automation function re-assigned, the network automation functions over the network automation function input interfaces (message 3-8, possibly message 3-9).

The network automation function NAF1 re-configures in block 3-10 itself accordingly. If NAFn were re-assigned, it also re-configures in block 3-11 itself accordingly.

Figure 4 illustrates an example functionality of the scope administration function.

Referring to Figure 4, the process start when the running scope administration function (block 400) detects (block 401) that a region assignment is triggered and divides (block 402) the operator-defined scope space into a plurality of regions. The scope space may be divided taking into account scope space constraints and the constraints associated with network automation functions. Further criteria to take into account may include hours in a day, days of a week, cells served by an access node, cells locating in a specific area, like in a city or downtown. However, there are no restrictions how the operator-defined scope space is divided into the regions.

Then network administration functions are assigned to regions. For the sake of clarity of description, the assignment is described herein in a region by region manner without restricting the assignment to such a manner. Hence a region is taken in block 403 to be processed, and an objective of the region is determined in block 404, the objective being expressed by means of the constraints. Using the information on constraints associated with network automation functions, one or more network automation functions that maximizes the objective of the region are determined in block 405, and the network automation functions are assigned in block 406 to the region.

Then it is checked, in block 407, whether all regions have undergone the assignment procedure. If not (block 407: no), the process returns to block 403 to take a region to be assigned.

If all regions are assigned (block 407: yes), network automation functions are configured in block 408, per a network automation function, over network automation function input interfaces, to control assigned regions.

Figure 5 illustrates another example functionality of the scope administration function. In the illustrated example, different scopes of regions and constraints of network automation function are taken into account.

Referring to Figure 5, the process start as the process in Figure 4, and blocks 500 to 504 correspond to blocks 400 to 404, and are not repeated in vain herein. When the objective of the region is determined (block 504), it is checked in block 505 whether there are any assignable network automation functions to the region. An assignable network automation function is a function having at least one constraint that may match with the objective.

If there are assignable network automation functions (block 505: yes). the best network automation functions is determined in block 506 and assigned to the region in block 507. In other words, using the information on constraints associated with network automation functions, the network automation function that maximizes the objective of the region is determined in block 506.

Then it is checked in block 508, whether the region is an exclusive region. An exclusive region can be controlled by one network automation function. For example, if a region is "antenna tilt, time", there can not be more than one network automation function controlling antenna tilts at the same time.

If the region is not an exclusive region (block 508: no), it is checked in block 509, whether there are other suitable network automation functions to be assigned, including network automation functions of the same type. If there is (block 509: yes), the next best (i.e. best of non-assigned network automation function that has not yet undergone this process) network automation function is determined in block 510. Then it is checked in block 511, whether the next best network automation function may co-exist with already assigned network automation function. A region may or may not be controlled by network automation functions of the same type and/or by network automation functions of different types. For example, if a region is "cell, time", one load balancing network automation function is allowed to control the region but the load balancing network automation function may co-exist with an interference optimization network automation function. In another example, if a region is "cell-pair, time", two load balancing network automation functions in two cells of the cell-pair may control the region, to concurrently optimize the shared boundary.

If the next best network automation function may co-exist (block 511: yes), the network automation function is assigned, in block 512 to the region and then the process returns to block 509 to check whether there are further other suitable network automation functions to be assigned.

If the next best network automation function may not co-exist (block 511: no), the network automation function is not assigned but the process returns to block 509 to check whether there are further other suitable network automation functions to be assigned.

If there are no other suitable network automation functions to be assigned (block 509: no), or if there were no assignable network automation functions (block 505: no), it is checked, in block 513, whether all regions have undergone the assignment procedure. If not (block 513: no), the process returns to block 503 to take a region to be assigned.

If all regions are assigned (block 513: yes), network automation functions are configured in block 514, per a network automation function, over network automation function input interfaces, to control assigned regions.

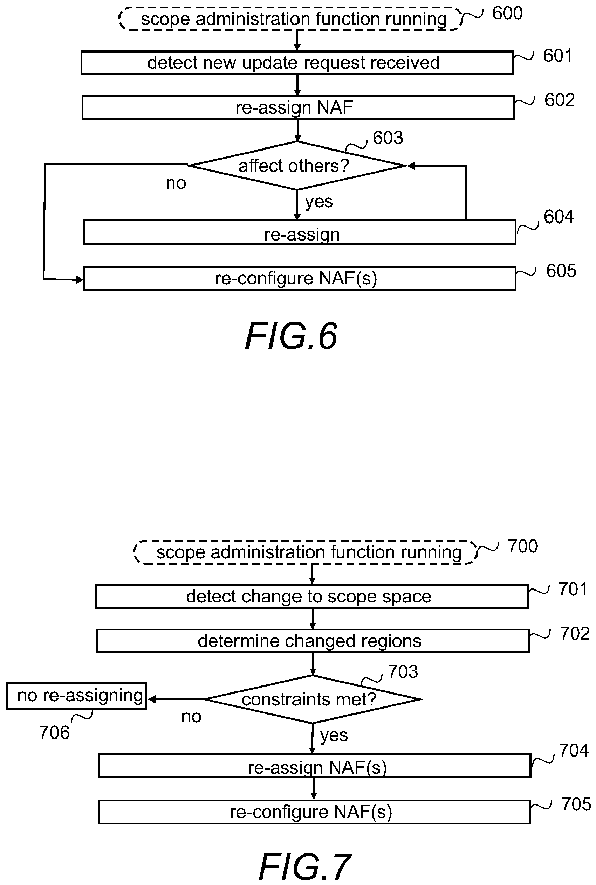

Figure 6 illustrates another example functionality of the scope administration function.

Referring to Figure 6, the process start when the running scope administration function (block 600) detects (block 601) that a new update request is received over a network automation function input interface. An update request is a new update request if it is a first update request indicating a problem. For example, if two network automation functions set the same parameter, both of them may send an update request but only the first update request is processed, since it already will solve the problem.

To solve the problem, the scope administration function will re-assign (block 602) the network automation function wherefrom the update request was received. Then it is checked in block 603, whether the re-assigning affect other network automation functions. If one or more other network automation functions are affected (block 603: yes), they are re-assigned in block 604, and the process returns to check, whether the re-assigning affect other network automation functions.

If the re-assigning does not affect other network automation functions (block 603: no), one or more re-assigned network automation functions are reconfigured in block 605 by sending corresponding information over network automation function input interfaces.

Depending on the problem and the network automation function, the re-assigning may even include that the network automation function is re-assigned not to control the region any more. On the other hand, the re-assigning may maintain the previous configuration. Using the above example of the two network automation functions setting the same parameter, the re-assigning may be that the one requesting the update is re-assigned to set the parameter (as it originally was), but the other one (affected) is re-assigned not to set the parameter.

Figure 7 illustrates another example functionality of the scope administration function.

Referring to Figure 7, the process start when the running scope administration function (block 700) detects (block 701) a change in the operator-defined scope space, and determines changed regions in block 702. Then the scope administration function checks, in block 703, whether constraints in the changed regions are met with current assignment of network automation functions.

If any of the constraints is not met (block 703: no), re-assigning of one or more network automation functions to meet the constraints is performed in block 704 and one or more re-assigned network automation functions are reconfigured in block 705 by sending corresponding information over network automation function input interfaces.

If the constraints are met (block 703: no), no re-assigning (block 706) takes place.

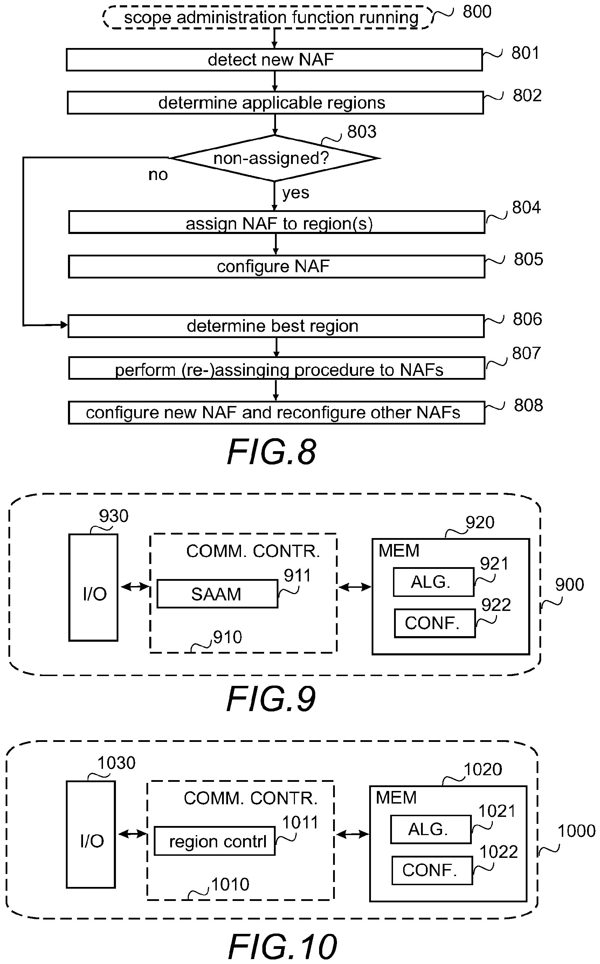

Figure 8 illustrates another example functionality of the scope administration function.

Referring to Figure 8, the process start when the running scope administration function (block 800) detects (block 801) a new network automation function (a network automation function entity) with associated constraints. Using the constraints, the scope administration function determines in block 802 applicable regions, and checks in block 803 whether any of the applicable regions is a non-assigned region, i.e. a region to which no network automation function has been assigned.

If there are one or more non-assigned regions (block 803: yes), the new network automation function is assigned in block 804 to the one or more regions and the network automation function is configured in block 805 correspondingly.

If all regions are assigned (block 803: no), the best region for the new network automation function amongst the applicable regions is determined in block 806. Then an assigning procedure for the new network automation function and a re-assigning procedure for one or more network automation functions earlier assigned to the best region are performed in block 807. Then the new network automation is configured and the one or more other, earlier assigned, network automation functions are reconfigured in block 808. Naturally, if the assignment of the new network automation function does not affect to an earlier assigned network automation function, there is no need to reconfigure in block 808 the an earlier assigned network automation function.

As can be seen from the above example, a tool to manage, assign and re-assign network automation functions with specific scopes in a way that minimizes overlaps and voids between network automation functions, thereby ensuring optimum network performance is disclosed.

The blocks, related functions, and information exchanges described above by means of Figures 2 to 8 are in no absolute chronological order, and some of them may be performed simultaneously or in an order differing from the given one. Other functions can also be executed between them or within them, and other information may be transmitted, and/or other rules applied or selected. Some of the blocks or part of the blocks or one or more pieces of information can also be left out or replaced by a corresponding block or part of the block or one or more pieces of information. For example, the scope space may have been divided into regions beforehand, and block 402 or block 502 can be omitted.

Figures 9 and 10 illustrate apparatuses (equipments) comprising a communication controller 910, 1010 such as at least one processor or processing circuitry, and at least one memory 920, 1020 including a computer program code (software, algorithm) ALG. 921, 1021, wherein the at least one memory and the computer program code (software, algorithm) are configured, with the at least one processor, to cause the respective apparatus to carry out any one of the embodiments, examples and implementations described above. Figure 9 illustrates an apparatus configured to assign and re-assign network automation functions to regions, and Figure 10 illustrates an apparatus for running one or more network automation functions as configured by the apparatus in Figure 9. The apparatuses of Figures 9 and 10 may be electronic devices.

Referring to Figures 9 and 10, the memory 920, 1020 may be implemented using any suitable data storage technology, such as semiconductor based memory devices, flash memory, magnetic memory devices and systems, optical memory devices and systems, fixed memory and removable memory. The memory may comprise a configuration storage CONF. 921, 1021, such as a configuration database, for example in the apparatus of Figure 9 for storing the space scope, its division to regions, and network automation function constraints, and in the apparatus of Figure 10 configuration received from the apparatus of Figure 9, and objectives of network automation function(s) residing in the apparatus of Figure 10.

Referring to Figure 9, the apparatus comprises a communication interface 930 comprising hardware and/or software for realizing communication connectivity according to one or more wireless and/or wired communication protocols. The communication interface 930 may provide the apparatus with communication capabilities with apparatuses of Figure 10 over the network automation function interfaces as well as communication capabilities over the dedicated interface towards the network operator equipment.

Digital signal processing regarding transmission and reception of signals may be performed in a communication controller 910. The communication interface may comprise standard well-known components such as an amplifier, filter, frequency-converter, (de)modulator, and encoder/decoder circuitries and one or more antennas.

The communication controller 910 comprises a scope administration function processing circuitry 911 (SAAM, scope assignment and administration module) configured to assign and re-assign regions to network automation functions according to any one of the embodiments/examples/implementations described above. The communication controller 910 may control the a scope administration function processing circuitry 911.

In an embodiment, at least some of the functionalities of the apparatus of Figure 9 may be shared between two physically separate devices, forming one operational entity. Therefore, the apparatus may be seen to depict the operational entity comprising one or more physically separate devices for executing at least some of the processes described with respect to the scope administration function.

Referring to Figure 10, the apparatus 1000 may further comprise a communication interface 1030 comprising hardware and/or software for realizing communication connectivity according to one or more communication protocols. The communication interface 1030 may provide the apparatus 1000 with communication capabilities the network automation function interface with the apparatus of Figure 9 as well as communication capabilities for controlling assigned one or more regions. The communication interface may comprise standard well-known analog components such as an amplifier, filter, frequency-converter and circuitries, and conversion circuitries transforming signals between analog and digital domains. Digital signal processing regarding transmission and reception of signals may be performed in a communication controller 1010.

The communication controller 1010 comprises a region controlling processing circuitry 1011 (region contr.) configured to control the region as assigned/re-assigned according to any one of the embodiments/examples/implementations described above. The region controlling processing circuitry 1011 may be configured to, in response to detecting a problem signal corresponding information to the apparatus of Figure 9 according to any one of the embodiments/examples/implementations described above. The communication controller 1010 may control the region controlling processing circuitry 1011.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 2 to 8 may be carried out by an apparatus comprising corresponding means for carrying out at least some of the described processes. The apparatus may comprise separate means for separate phases of a process, or means may perform several phases or the whole process. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and/or circuitry. In an embodiment, the at least one processor, the memory, and the computer program code form processing means or comprises one or more computer program code portions for carrying out one or more operations according to any one of the embodiments/examples/implementations described herein.

According to yet another embodiment, the apparatus carrying out the embodiments/examples comprises a circuitry including at least one processor and at least one memory including computer program code. When activated, the circuitry causes the apparatus to perform at least some of the functionalities according to any one of the embodiments/examples/implementations of Figures 2 to 8, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the apparatuses (nodes) described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments/examples/implementations as described may also be carried out in the form of a computer process defined by a computer program or portions thereof. Embodiments of the methods described in connection with Figures 2 to 8 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

It will be obvious to a person skilled in the art that, as technology advances, the inventive concept may be implemented in various ways. The embodiments are not limited to the exemplary embodiments described above, but may vary within the scope of the claims. Therefore, all words and expressions should be interpreted broadly, and they are intended to illustrate, not to restrict, the exemplary embodiments.

## Claims

1. An apparatus comprising
at least one processor; and
at least one memory including computer program code, the at least one memory and computer program code configured to, with the at least one processor, cause the apparatus at least to perform:
running a scope administration function;
assigning, by the scope administration function, per a region in an operator-defined scope space, the region to at least one network automation function amongst a plurality of coexisting network automation functions; and
configuring, by the scope administration function, per a network automation function assigned at least to one region, the network automation function to control the at least one region assigned to the network automation function.

2. The apparatus of claim 1, wherein the at least one memory and computer program code configured to, with the at least one processor, cause the apparatus further to at least to perform:
dividing, by the scope administration function, before performing the assigning, the operator-defined scope space into regions, wherein the regions cover the whole operator-defined scope space.

3. The apparatus of claim 1 or 2, wherein the at least one memory and computer program code configured to, with the at least one processor, cause the apparatus further to perform:
determining, by the scope administration function, objective of the region;
assigning, by the scope administration function, to the region one or more network automation functions that maximize the objective.

4. The apparatus of claim 1, 2 or 3, wherein the at least one memory and computer program code configured to, with the at least one processor, cause the apparatus further to perform:
re-assigning, by the scope administration function, in response to receiving from a network automation function a request to update at least one region assigned to the network automation function, one or more regions in the operator-defined scope space; and
reconfiguring at least network automation functions whose assigned one or more regions changed during the re-assigning to correspond to the re-assigned regions.

5. The apparatus of any preceding claim, wherein the at least one memory and computer program code configured to, with the at least one processor, cause the apparatus further to perform:
providing an interface over which the operator-defined scope space is received and/or changes to the operator-defined scope space are received.

6. An apparatus comprising
at least one processor; and
at least one memory including computer program code, the at least one memory and computer program code configured to, with the at least one processor, cause the apparatus at least to perform:
running at least one network automation function; and
configuring, in response to receiving from a scope administration function at least one region within an operator-defined scope space assigned to one of the at least one network automation function, said one of the at least one network automation function to control the at least one region.

7. The apparatus of claim 6, wherein the at least one memory and computer program code configured to, with the at least one processor, cause the apparatus further to at least to perform:
detecting a scope related problem with at least one of the at least one region; and
requesting the scope administration function to update said at least one of the at least one region.

8. The apparatus of claim 6 or 7, wherein the at least one memory and computer program code configured to, with the at least one processor, cause the apparatus further to at least to perform:
reconfiguring, in response to receiving from the scope administration function an update to at least one region assigned to one of the at least one network automation function, said one of the at least one network automation function correspondingly.

9. The apparatus of any of claims 1 to 8, wherein the at least one memory and computer program code configured to, with the at least one processor, cause the apparatus further to at least to perform using a dedicated interface between the network automation function and the scope administration function.

10. A method comprising:
running a scope administration function;
assigning, by the scope administration function, per a region in an operator-defined scope space, the region to at least one network automation function amongst a plurality of coexisting network automation functions; and
configuring, by the scope administration function, per a network automation function assigned at least to one region, the network automation function to control the at least one region assigned to the network automation function.

11. A method comprising:
running at least one network automation function;
receiving from a scope administration function at least one region within an operator-defined scope space assigned to one of the at least one network automation function; and
configuring, in response to, said one of the at least one network automation function to control the at least one region

12. A computer-readable medium comprising program instructions, which, when run by an apparatus, causes the apparatus at least to carry out:
assigning, per a region in an operator-defined scope space, the region to at least one network automation function amongst a plurality of coexisting network automation functions;
configuring, per a network automation function assigned at least to one region, the network automation function to control the at least one region assigned to the network automation function.

13. A computer-readable medium comprising program instructions, which, when run by an apparatus, causes the apparatus at least to carry out:
configuring, in response to receiving from a scope administration function at least one region within an operator-defined scope space assigned to one of the at least one network automation function, said one of the at least one network automation function to control the at least one region.

14. A computer readable medium as claimed in claim 12 or 13, wherein the computer readable medium is a non-tangible computer readable medium.

15. A computer program comprising instructions which, when the program is executed by an apparatus, cause the apparatus to carry out at least:
assigning, per a region in an operator-defined scope space, the region to at least one network automation function amongst a plurality of coexisting network automation functions;
configuring, per a network automation function assigned at least to one region, the network automation function to control the at least one region assigned to the network automation function.

16. A computer program comprising instructions which, when the program is executed by an apparatus, cause the apparatus to carry out at least:
configuring, in response to receiving from a scope administration function at least one region within an operator-defined scope space assigned to one of the at least one network automation function, said one of the at least one network automation function to control the at least one region.
